# EUROPEAN PATENT APPLICATION

(11) **EP 3 718 647 A1**
(43) Date of publication of application: **07.10.2020**
(21) Application number: 19166654.4
(22) Date of filing: 01.04.2019
(51) Int. Cl.: B06B 3/00, B23K 20/10

(54) **TORSIONAL HORN AND ULTRASONIC PROCESSING METHOD USING THE TORSIONAL HORN**

(71) Applicant: Branson Ultraschall Niederlassung der Emerson Technologies GmbH & Co. oHG, 63128 Dietzenbach (DE)
(72) Inventor: BLASKO, Marian, Piestany 92101 (SK); SIPOS, Ludovit, 91501 Nové Mesto nad Váhom (SK)
(74) Representative: HWP Intellectual Property

(57) **Abstract**

The invention is related to a torsional horn (1; 100; 200; 300; 400; 500) for converting longitudinal ultrasonic vibration to torsional ultrasonic vibration. The torsional horn (1; 100; 200; 300; 400; 500) comprises a longitudinal main body having a first end (12; 112; 212; 312; 412; 512) for connecting to a converter and a second end (52; 152; 252; 352; 452; 552) spaced from the first end (12; 112; 212; 312; 412; 512) along a longitudinal axis of the main body, wherein the longitudinal axis corresponds to an excitation direction of the torsional horn (1; 100; 200; 300; 400; 500) by the converter during use, a center portion (30; 130; 230; 330; 430; 530) arranged between the first (12; 112; 212; 312; 412; 512) and the second end (52; 152; 252; 352; 452; 552), and a plurality of longitudinal grooves (32; 132; 232; 332; 432; 532) formed in the outer surface of the torsional horn (1; 100; 200; 300; 400; 500) in the center portion (30; 130; 230; 330; 430; 530), wherein a longitudinal axis of the plurality of longitudinal grooves (32; 132; 232; 332; 432; 532) is inclined with respect to the longitudinal axis of the torsional horn (1; 100; 200; 300; 400; 500) so that in use ultrasonic vibrations imparted with longitudinal direction from the converter to the first end (12; 112; 212; 312; 412; 512) of the main body are at least partly converted to torsional vibrations.

## Description

### 1. Field of the invention

The present invention is related to a torsional horn for converting longitudinal ultrasonic vibration to torsional ultrasonic vibration, an ultrasonic processing device comprising the torsional horn, a usage of the torsional horn, a manufacturing method for the torsional horn as well as an ultrasonic processing method using the torsional horn.

### 2. Background of the invention

An ultrasonic horn or sonotrode is generally known in the art. Usually, the horn is excited by a converter so that ultrasonic vibrations with longitudinal direction are imparted to the horn and transmitted thereby to one or two parts or components to be processed, for example two parts to be welded to each other.

In specific technical fields, the application of such ultrasonic reciprocating vibrations applied to the horn are disadvantageous as they act on the portions of the parts or components to be processed as if beating. In other words, the ultrasonic vibrations are applied perpendicular to a surface of the parts to be processed. This may damage the components or worsen their visual appearance.

For example and with respect to the field of automotive industry, the above mentioned disadvantage is illustrated based on sensors to be mounted into a car bumper. For being able to fasten a respective sensor at a car bumper, an opening has to be provided in the bumper.

In a first alternative, such an opening may be provided prior to coating the bumper with paint. This course of procedure is, however disadvantageous as at least one additional working step is required. For example, first of all the opening has to be provided, thereafter the bumper is coated with paint and finally, after drying of the paint, a holder for the sensor can be mounted to the bumper. Consequently, it is desirable to make an opening into a bumper already coated with paint.

However, if such a coated bumper is processed with a device applying ultrasonic vibrations as explained above, i.e. as if beating, the visual appearance of the painted side will be impaired due to the heat generated in the bumper, even in case the device applying ultrasonic vibrations is used on the back side of the bumper.

Accordingly, and for avoiding ultrasonic vibrations in the longitudinal direction, i.e. perpendicular to the surface of the respective part, a known alternative is the usage of a torsional horn or sonotrode for sensitive components and/or specific applications.

US 2013/0075454 A1 describes such a torsion sonotrode which comprises two mutually opposing end faces and a circumferential surface which surrounds a torsion axis and on which at least one working surface is provided at a radial distance from the torsion axis. The torsional movement is caused by two converters arranged perpendicular to the torsion axis and coupled to the torsion sonotrode by a specific mechanism.

Further torsion horns are described in US 2010/0078115 A1, US 5,830,300, US 2010/0040903 A1, US 5,603,444 and EP 1 410 988 A1. In each of these devices, the torsional movement is already imparted on the sonotrode, for example by a vibrating element causing ultrasonic rotational vibrations.

EP 0 664 203 A1 describes another horn which directly converts longitudinal vibrations produced in an ultrasonic processing device to torsional vibrations. The horn comprises a vibration converting portion and a torsional vibration tool portion, both portions are integrally formed. A disc-like main body is provided in which flexible vibrations are induced when longitudinal ultrasonic vibrations are provided. A pair of projecting frames are formed on one side of the disc-like main body and a connecting elongated projection is formed on the other side, wherein the connecting elongated projection and the projecting frames are placed diagonally to each other. However, in practice the field of application of this horn was limited.

It is therefore an object of the present invention to provide a compact torsional horn which is improved regarding the prior art devices while at the same time allowing the processing of a wide range of materials.

### 3. Summary of the invention

The above object is solved by a torsional horn for converting longitudinal ultrasonic vibration to torsional ultrasonic vibration according to independent claim 1, an ultrasonic processing device according to independent claim 13, a usage of the torsional horn according to independent claim 15, a manufacturing method for the torsional horn according to independent claim 16 as well as an ultrasonic processing method using the torsional horn according to independent claim 17. Further preferred embodiments and developments result from the following description, the drawings as well as the appending claims.

An inventive torsional horn for converting longitudinal ultrasonic vibration to torsional ultrasonic vibration comprises a longitudinal main body having a first end for connecting to a converter and a second end spaced from the first end along a longitudinal axis of the main body, wherein the longitudinal axis corresponds to an excitation direction of the torsional horn by the converter during use, a center portion arranged between the first and the second end, and a plurality of longitudinal grooves formed in the outer surface of the torsional horn in the center portion, wherein a longitudinal axis of the plurality of longitudinal grooves is inclined with respect to the longitudinal axis of the torsional horn so that in use ultrasonic vibrations imparted with longitudinal direction from the converter to the first end of the main body are at least partly converted to torsional vibrations.

For improving the understanding of the present invention, the torsional horn is described during use, i.e. when the first end is coupled to a converter. In this regard, the main body of the torsional horn is preferably integrally formed of one piece of material, especially a material comprising steel, titanium, ferro-titanium or aluminum.

By means of the converter, a longitudinal vibration is imparted to the first end of the torsional horn. This longitudinal vibration is transferred by the main body from the first end in the direction of the center portion. In the center portion, the direction of the longitudinal vibration is at least partly changed due to the plurality of inclined grooves provided in the center portion. Consequently, in the further course of procedure, the former longitudinal vibration now is at least partly a torsional vibration so that the second end of the main body of the torsional horn moves forth and back around the longitudinal axis of the horn for a specific angle range. In other words, the horn rotates at the second end around its longitudinal axis for the specific angle range forth and back. The respective angle range is correlated to the frequency of the ultrasonic vibration and may be in the range of several tenths of one degree. At the same time and particularly depending on the number, angle and depth of the inclined grooves, some longitudinal vibration may still be present at the second end although it is especially preferred that all longitudinal vibration is converted due to the inclined grooves in the center portion to torsional vibration. The frequency of the ultrasonic vibration is preferably not affected by the conversion from longitudinal vibration to torsional vibration based on the above geometric features so that the frequency remains the same.

A specific advantage of this construction is that materials which might be damaged or visually impaired by ultrasonic processing devices having only a longitudinal vibration, i.e. materials which could in fact not be processed with such a device, can now be processed by applying ultrasonic vibrations with the inventive torsional horn. Possible processing methods include, beside others and as will be explained in detail below, welding, cutting and punching.

Further, and with respect to the known torsional horns, a particularly cost effective and simple construction is provided due to the one-piece structure of the inventive torsional horn, which makes additional components or the like superfluous for achieving a torsional movement at the second end of the horn. Especially, no torsional converter is required as the conversion of the longitudinal vibrations to the torsional vibrations is caused by the specific geometry of the horn in particular in the center portion, i.e. by means of the inclined grooves.

In a preferred embodiment, the center portion of the torsional horn is formed convex so that the center portion has a larger diameter compared to a diameter of the torsional horn adjacent to the first and the second end. Especially preferred, the convex center portion is formed elliptically. The specific advantage of this embodiment is that due to the convex design of the center portion, the material of the main body of the torsional horn can better absorb high stresses coming from the mechanical excitation imparted by the converter. Thus, the torsional horn has a longer useful life.

In a further preferred embodiment, a front face of the torsional horn at the second end comprises a knurling, a saw-tooth profile or an even surface. By means of the respective design and/or profiling, the torsional horn can be adapted to different ultrasonic processing methods. For example, a saw-tooth profile is preferred in case a cutting of a material to be processed shall be performed. A knurling may thus be advantageous in case of a welding process.

Additionally, it is preferred that the main body of the torsional horn is partly hollow from the second end towards the center portion, especially up to the center portion. Especially preferred, the center portion is formed at least partly elliptical in the interior. As an alternative, the interior may conform to any other continuous curve. Exactly such a shape serves to achieve an even more homogenous stress distribution within the main body of the torsional horn, specifically in combination with a convex center portion as described above. The remaining wall thickness of the torsional horn in these areas is, nevertheless, high enough to withstand the applied forces. Accordingly, this requirement is a restriction for the diameter of the recess formed in the interior of the torsional horn.

Furthermore, it is preferred that the grooves are inclined with respect to the longitudinal axis in a range between 20° and 55°. The inclination may be present clockwise, i.e. + 20° to + 55°, or counterclockwise, i.e. - 20° to - 55°. In other words, the longitudinal axis of the grooves may be tilted to the right or to the left with respect to the longitudinal axis of the torsional horn. In particular it is preferred that all grooves are inclined with the same angle. Additionally, the grooves are even more preferred inclined in the same direction, i.e. clockwise or counterclockwise. As explained above, the inclination of the grooves is one of the key features which is decisive for the conversion of the longitudinal vibration into a torsional vibration. In this regard it was found that specifically the claimed angle range serves for very effectively converting the longitudinal vibration to a torsional vibration.

According to a further preferred embodiment, the grooves are arranged on the circumference of the center portion equally spaced from each other. To this end, the center portion may comprises an even or an uneven number of grooves, for example up to seven or eight grooves. Each of the grooves is preferably designed in the same way, i.e. having the same angle of inclination, as explained above, the same length, the same width and the same depth. Moreover, it was found that the depth of the grooves has a greater influence on the conversion of the vibration compared to the length and the width. Accordingly, besides the angle of inclination the depth of the grooves is decisive for an effective conversion. The same applies in view of the number of grooves. In summary, the features having a great influence on the conversion of the longitudinal vibration into a torsional vibration are the inclination angle of the grooves, the depth of the grooves and the number of grooves. The width and the length of the grooves have less influence. Nevertheless, all of the above listed features of the grooves interact with each other so that they influence each other. Accordingly, and for example, a lower depth may be compensated by a higher number of grooves or a greater angle of inclination and vice versa.

It is furthermore preferred that the main body comprises, on the outer side, a first transition portion between the first end and the center portion and/or a second transition portion between the center portion and the second end, especially in combination with the torsional horn having the convex center portion. Particularly preferred, the torsional horn comprises a first cylindrical portion between the first transition portion and the first end and/or a second cylindrical portion between the second transition portion and the second end.

The first cylindrical portion serves for directing the longitudinal ultrasonic vibration imparted by the converter to the center portion. To this end, it is important to have more mass in the first cylindrical portion above a nodal point compared to the remaining of the horn. A result of such a design is that the torsional horn has better amplification and enough stiffness and damping effect on possible reverse torsional movements. Consequently, the length of the first cylindrical portion is important and determined considering these points.

The second cylindrical portion is adapted in its diameter to the processing task to be performed by the torsional horn. Further, and as explained above, the front face of the second end may be designed and/or profiled based on the processing method to be performed.

Regarding the first and/or second transition portion, a smooth transition is preferred. Especially a great transition radius further improves the stress distribution within the main body of the torsional horn.

An inventive ultrasonic processing device comprises a converter and the above described inventive torsional horn. With respect to the resulting technical effects and advantages, it is referred to the above explanations for avoiding an unnecessary repetition.

In a preferred embodiment, the converter is directly coupled to the first end of the main body of the torsional horn. Thus, the longitudinal vibration provided by the converter is directly imparted to the main body of the torsional horn at the first end thereof. Directly means in this regard that the converter is coupled to the first end with or without a booster arranged between converter and first end of the horn. Besides the optional booster, no other component is preferably present. Consequently, no torsional movement is imparted to the first end of the torsional horn. This further stresses that the torsional vibration at the second end is solely achieved by converting the imparted longitudinal vibration in the center portion by means of the specific geometry and in particular by means of the inclined grooves in the center portion.

According to the invention, the inventive torsional horn is used in a welding method, a cutting method or a punching method. The usage of the inventive torsional horn in the different processing methods depends on the design and structure especially of the front face of the second end, as also explained above. Thus, and with respect to the resulting technical effects, we again refer to the above statements.

An inventive manufacturing method for the inventive torsional horn comprises the steps: providing a block of material, especially a material comprising steel, titanium, ferro-titanium or aluminum, processing the block of material on the outer side for establishing a longitudinal main body having a first end for connecting to a converter and a second end spaced from the first end along a longitudinal axis of the main body as well as a center portion arranged between the first and the second end, and forming a plurality of longitudinal grooves in the outer surface of the torsional horn in the center portion, wherein a longitudinal axis of the plurality of longitudinal grooves is inclined with respect to the longitudinal axis of the torsional horn. By means of this manufacturing method, the inventive torsional horn can be produced. Concerning the advantages and technical effects, it is thus also referred to the above explanations.

Finally, an ultrasonic processing method according to the invention and using the inventive torsional horn, comprises the steps: providing at least a first material to be processed and processing the first material by means of the inventive torsional horn. Especially preferred, the processing is at least one of welding, cutting or punching. Regarding the resulting technical effects and advantages it is again referred to the above statements in view of the inventive torsional horn.

### 4. Short description of the drawings

In the following, the present invention will be described in detail based on the drawings. In the drawings, the same reference signs denote the same elements and/or components. It shows:
- Figure 1: a side view of a first embodiment of a torsional horn according to the invention,
- Figure 2: a side view of a second embodiment of a torsional horn according to the invention,
- Figure 3: an enlarged portion of the torsional horn according to Fig. 2
- Figure 4: a side view of a third embodiment of a torsional horn according to the invention,
- Figure 5: a side view of a fourth embodiment of a torsional horn according to the invention,
- Figure 6: side views of a fifth and sixth embodiment of a torsional horn according to the invention,
- Figure 7: a flow chart of an embodiment of a manufacturing method of a torsional horn according to the invention and
- Figure 8: a flow chart of an embodiment of an ultrasonic processing method of a torsional horn according to the invention.

### 5. Detailed description of preferred embodiments

In the following, several embodiments of a torsional horn according to the invention will be discussed. In this regard, all discussed embodiments have in common that a main body of the torsional horn is integrally formed of one piece of material. Possible materials comprise for example one of steel, titanium, ferro-titanium or aluminum. The specific fields of application depend on the design and/or profiling of a front face at a second end, i.e. the end which is during use in contact with the component or components to be processed, as will also be explained below.

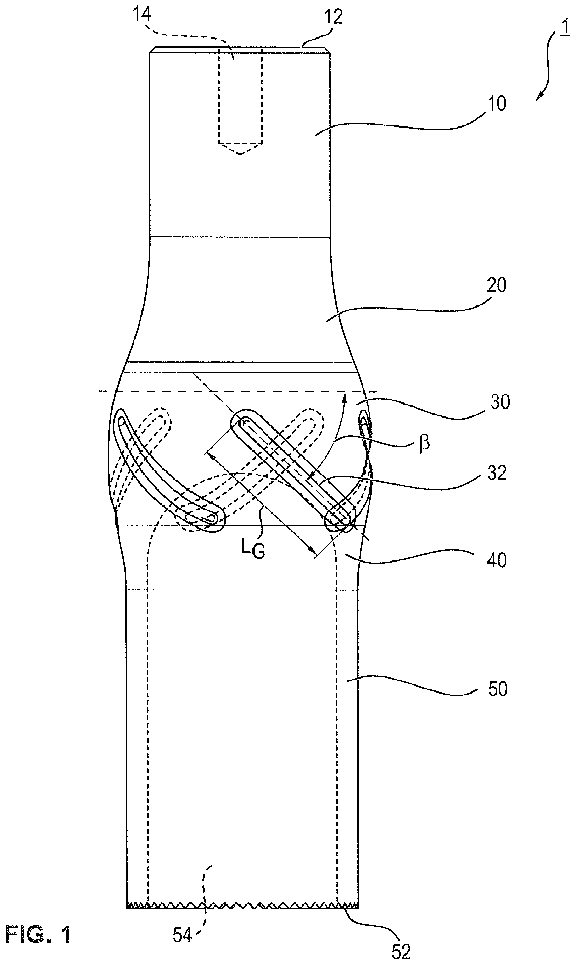

Fig. 1 shows a first embodiment of a torsional horn 1 according to the present invention. For an easier understanding, the exterior design of the torsional horn 1 is explained in a first step along a longitudinal axis thereof, i.e. the axis corresponding to the excitation direction of the torsional horn 1 by a converter during use.

The torsional horn 1 comprises a first cylindrical portion 10 having a first end 12. The first end 12 serves during use for connecting to the converter (not shown) which will impart longitudinal vibration to the first end 12. In this regard, the converter is coupled directly, i.e. with or without usage of a booster, to the first end 12 by means of a bore 14 for establishing the connection. Thus, and during use, longitudinal vibration will be imparted to the first end 12 of the torsional horn 1.

The first cylindrical portion 10 serves for directing the longitudinal ultrasonic vibration imparted by the converter via a first transition portion 20 to a center portion 30. To this end, it is in particular important to have more mass in the first cylindrical portion 10 above a nodal point compared to the remaining of the torsional horn 1. A result of such a design is that the torsional horn 1 has better amplification and enough stiffness and damping effect on possible reverse torsional movements. Consequently, a length of the first cylindrical portion 10 is important and determined based on the desired frequency for the ultrasonic vibrations and considering these points.

As already mentioned, a first transition portion 20 is present adjacent to the first cylindrical portion 12. The first transition portion 20 is provided for ensuring a smooth transition into the convex center portion 30. Thus, the first transition portion 20 has preferably a great transition radius which specifically improves the stress distribution within the main body of the torsional horn 1.

Next to the first transition portion 20, the convex center portion 30 is provided. As a result of the convex shape, the center portion 30 has a larger diameter compared to a diameter of the torsional horn 1 adjacent to the first 12 and a second end 52, i.e. compared to a diameter of the first cylindrical portion 10 and a second cylindrical portion 50 to be discussed below. In a first alternative, the convex center portion 30 is formed elliptically. In other alternatives, the convex center portion 30 may have any continuously curved shape. The specific effect of the convex design of the center portion 30 is that the material of the main body of the torsional horn 1 can better absorb high stresses coming from the mechanical excitation imparted by the converter. Thus, the torsional horn 1 has a longer useful life.

Furthermore, the convex center portion 30 comprises a plurality of longitudinal grooves 32 formed in the outer surface of the torsional horn 1. As can be seen, a longitudinal axis of the grooves 32 is inclined with respect to the longitudinal axis of the torsional horn 1. In the present case, the grooves 32 are inclined counterclockwise, i.e. tilted to the left, and the angle of inclination is 45° with respect to the longitudinal axis of the torsional horn 1. In the illustration, the angle is indicated with respect to an axis perpendicular to the longitudinal axis of the torsional horn 1. The latter angle is denoted with reference sign β.

In the embodiment shown, five grooves 32 are arranged on the circumference of the center portion 30 equally spaced from each other. Each of the grooves 32 is designed in the same way, i.e. having the same angle of inclination, as explained above, the same length L_{G}, the same width WG and the same depth.

With respect to the longitudinal vibrations imparted by the converter to the first end 12 and transmitted via the first cylindrical portion 10 and the first transition portion 20, these longitudinal vibrations are at least partly converted to torsional vibrations in the center portion 30 due to the plurality of inclined grooves 32. In this regard, especially the angle of inclination has a high impact on the respective conversion. Consequently, in the further course of procedure, the former longitudinal vibration now is at least partly a torsional vibration, preferably solely a torsional vibration.

To this end, and besides the angle of inclination, the depth of the grooves 32 has a greater influence on the conversion of the vibration compared to the length and the width of the grooves 32. The same applies in view of the number of grooves 32. Accordingly, the angle of inclination, the depth of the grooves 32 and the number of grooves 32 are decisive for an effective conversion. The width W_{G} and the length L_{G} of the grooves 32 have less influence. Nevertheless, all of the above listed features of the grooves 32 interact with each other so that they influence each other. Accordingly, and for example, a lower depth may be compensated by a higher number of grooves or a greater angle of inclination and vice versa.

Adjacent to the convex center portion 30, a second transition portion 40 is arranged. The second transition portion 40 is provided for ensuring a smooth transition from the convex center portion 30 to a second cylindrical portion 50. Accordingly, a great transition radius is preferred which further improves the stress distribution within the main body of the torsional horn 1.

Finally, and next to the second transition portion 40, the second cylindrical portion 50 is provided. The second cylindrical portion 50 is adapted in its diameter to the parts or components to be processed. Further, a front face at a second end 52 of torsional horn 1, i.e. the end opposite the first end 12, comprises a structure adapted to the intended processing method. In the present example, the front face of the torsional horn 1 at the second end 52 comprises a knurling. Alternatively, the front face may comprise a saw-tooth profile or an even surface. By means of the respective design, profiling or structure, the torsional horn 1 can be adapted to different ultrasonic processing methods. For example, a saw-tooth profile is preferred in case a cutting of a material to be processed shall be performed. A knurling may thus be advantageous in case of a welding process.

With respect to the embodiment shown in Fig. 1, the main body of the torsional horn is partly hollow from the second end 52 towards the center portion 30, in particular up to the center portion 30. In the center portion 30, the interior is shaped dome-like. This design of the interior serves to achieve an even more homogenous stress distribution within the main body of the torsional horn 1, specifically in combination with the convex center portion 30. Nevertheless, the remaining wall thickness in the second cylindrical portion 50 is high enough to withstand the applied forces.

As a result of the specific geometry of the torsional horn 1 described above with respect to Fig. 1, the second end 52 of the main body of the torsional horn 1 moves forth and back around the longitudinal axis of the horn 1 for a specific angle range. In other words, the horn 1 rotates at the second end 52 around its longitudinal axis for the specific angle range forth and back. The respective angle range is correlated to the frequency of the ultrasonic vibration and may be in the range of several tenths of one degree. At the same time and particularly depending on the number, angle and depth of the inclined grooves 32, some longitudinal vibration may still be present at the second end 52 as explained above. Nevertheless, is especially preferred that all longitudinal vibration is converted due to the inclined grooves 32 in the center portion 30 to torsional vibration. In this regard, the frequency of the ultrasonic vibration is not changed by the conversion based on the specific geometric design of the torsional horn 1.

Thus, by means of the torsional horn 1 according to Fig. 1, materials which might be damaged or visually impaired by ultrasonic processing devices having only a longitudinal vibration can now be processed by applying ultrasonic vibrations with this embodiment of the inventive torsional horn 1. Further, a particularly cost effective and simple construction is provided due to the one-piece structure of the torsional horn 1, which makes additional components or the like superfluous for achieving a torsional movement at the second end 52 of the horn 1. Especially, no torsional converter is required as the conversion of the longitudinal vibrations to the torsional vibration is caused by the specific geometry of the horn 1 in particular in the center portion 30, i.e. by means of the inclined grooves 32.

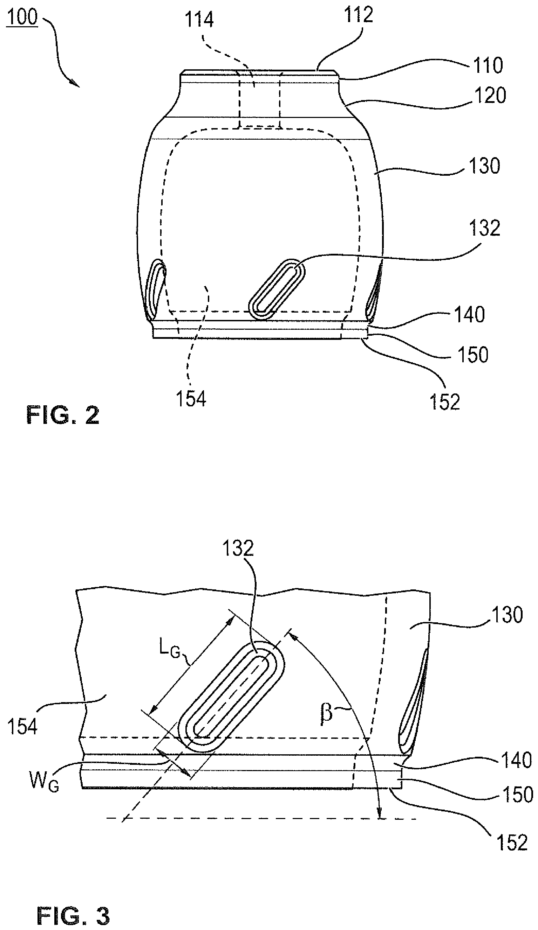

A second embodiment of an inventive torsional horn 100 is shown in Figures 2 and 3. Concerning the basic structure, the torsional horn 100 according to the second embodiment corresponds to the first embodiment of the torsional horn 1. Nevertheless, and in contrast to the first embodiment, the first cylindrical portion 110, the first transition portion 120, the second transition portion 140 as well as the second cylindrical portion 150 are shorter compared to the torsional horn 1 of the first embodiment.

A further difference results in view of the arrangement, design and number of the grooves 132. First of all, four grooves 132 are provided around the circumference. Further, these grooves 132 are inclined clockwise, i.e. tilted to the right, by an angle of 50° with respect to an axis perpendicular to the longitudinal axis of the torsional horn 100. Thus, the angle of inclination with respect to the longitudinal axis is 40°. Finally, especially the length of the grooves 132 is reduced compared to the grooves 32 provided in the first embodiment of the horn 1. As a common feature, the lower end of the grooves 132 is arranged adjacent the second transition portion 140, just like the lower end of the grooves 32 in the first embodiment of the torsional horn 1.

Regarding the design of the interior 154, the center portion 130 is formed at least partly elliptical in the interior. As an alternative, the interior 154 may conform to any other continuous curve. As already explained above, exactly such a shape serves to achieve an even more homogenous stress distribution within the main body of the torsional horn 100, specifically in combination with the convex center portion 130.

With respect to the front face at the second end 152, it is designed as even surface.

Concerning the function, the technical effects as well as the advantages, it is referred to the first embodiment of the torsional horn 1. Thus, the different designs of the torsional horn serve for adapting the torsional horn to the imparted ultrasonic frequency as well as the processing task to be performed.

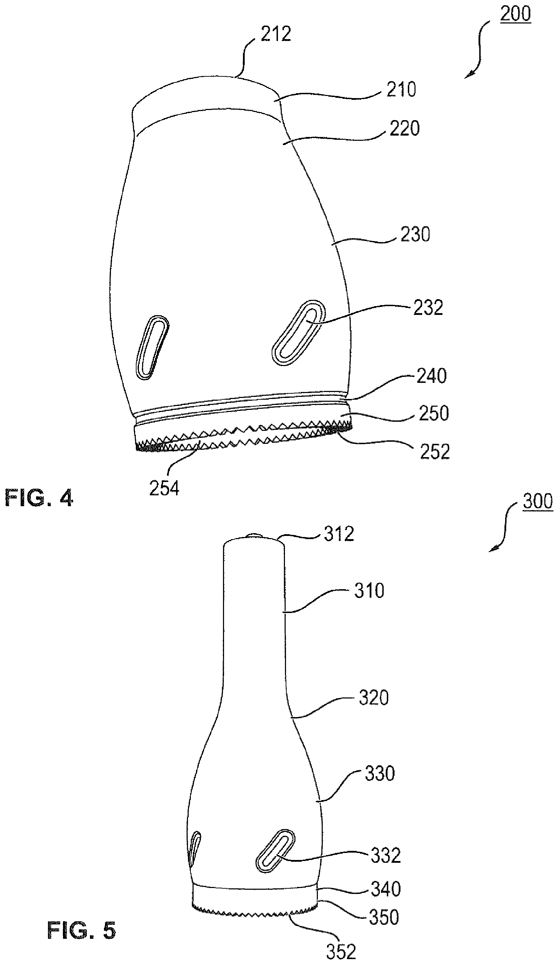

Now referring to Figure 4, a third embodiment of a torsional horn 200 is discussed which is specifically adapted to a frequency of the imparted ultrasonic vibration of 40 kHz. The torsional horn 200 of the third embodiment is a combination of the above discussed first 1 and second embodiment of the torsional horn 100. In this regard, it comprises a first cylindrical portion 210 which transitions after a relatively short distance into the first transition portion 220. The first transition portion 220 is formed smooth, just like discussed above for the first embodiment of the torsional horn 1. The design of the convex portion 230 including the grooves 232 as well as the second transition portion 240 and the second cylindrical portion 250 corresponds to the design of the respective portions of the second embodiment of the torsional horn 100. In contrast to the second embodiment, the front face at the second end 252 comprises a saw-tooth profile.

Figure 5 shows a fourth embodiment of a torsional horn 300 adapted to a frequency of the imparted ultrasonic vibration of 30 kHz. This embodiment differs from the third embodiment of the torsional horn 200 in that the first cylindrical portion 310 is formed longer.

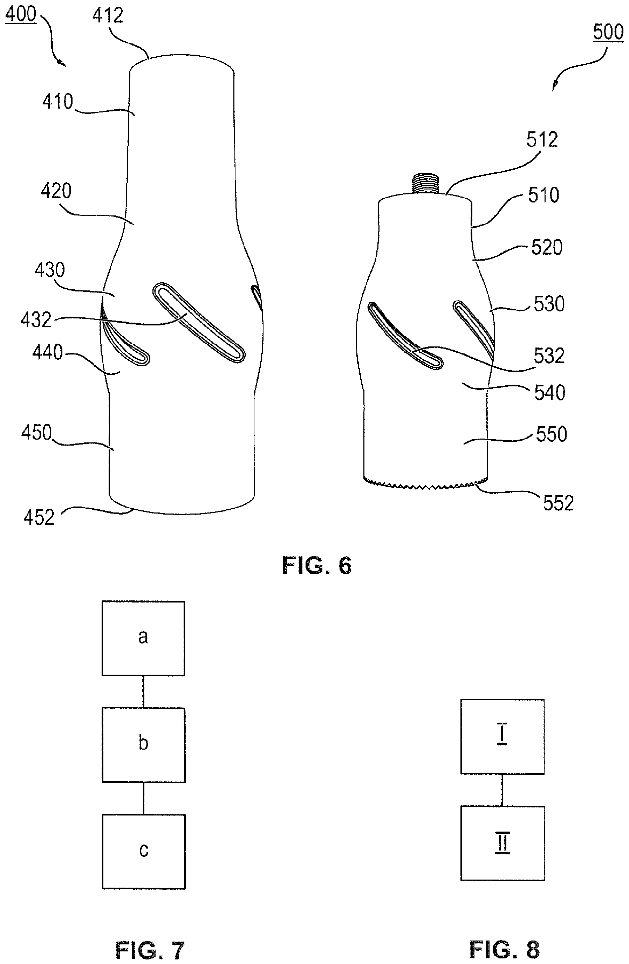

Finally, Figure 6 shows on the left side a fifth embodiment of a torsional horn 400 and on the right side a sixth embodiment of a torsional horn 500. The fifth embodiment of the torsional horn 400 corresponds in many aspects to the first embodiment of the torsional horn 1. In contrast to the first embodiment, the fifth embodiment of the torsional horn 400 comprises an even surface at the front face at the second end 452 thereof.

The sixth embodiment of the torsional horn 500 corresponds in many aspects to the first 1 and, thus, to the fifth embodiment of the torsional horn 400. In contrast to both, the first 510 and the second cylindrical portion 550 are formed shorter. Further, and like the first embodiment of the torsional horn 1, the front face at the second end 552 is provided with a knurling.

Now referring to Figure 7, an embodiment of a manufacturing method for the above described torsional horn 1; 100; 200; 300; 400; 500 is discussed. In a first step a, a block of material, especially a material comprising steel, titanium, ferro-titanium or aluminum is provided. Subsequently, the block of material is processed in step b on the outer side for establishing a longitudinal main body having a first end 12; 112; 212; 312; 412; 512 for connecting to a converter and a second end 52; 152; 252; 352; 452; 552 spaced from the first end 12; 112; 212; 312; 412; 512 along a longitudinal axis of the main body as well as a center portion 30; 130; 230; 330; 430; 530 arranged between the first 12; 112; 212; 312; 412; 512 and the second end 52; 152; 252; 352; 452; 552. Finally, in step c a plurality of longitudinal grooves 32; 132; 232; 332; 432; 532 is formed in the outer surface of the torsional horn 1; 100; 200; 300; 400; 500 in the center portion 30; 130; 230; 330; 430; 530. In this regard, and as explained above, a longitudinal axis of the plurality of longitudinal grooves 32; 132; 232; 332; 432; 532 is inclined with respect to the longitudinal axis of the torsional horn 1; 100; 200; 300; 400; 500.

An ultrasonic processing method using one of the above described torsional horns 1; 100; 200; 300; 400; 500 is explained with reference to Figure 8. In this regard, at least a first material to be processed is provided in a first step I. Thereafter, the first material is processed in step II by means of one of the above described torsional horns 1; 100; 200; 300; 400; 500. In particular, the processing is at least one of welding, cutting or punching, as also discussed in detail above.

### 6. List of reference signs

- 1: torsional horn
- 10: first cylindrical portion
- 12: first end
- 14: bore
- 20: first transition portion
- 30: center portion
- 32: groove
- 40: second transition portion
- 50: second cylindrical portion
- 52: second end
- 54: hollow interior

- 100: torsional horn
- 110: first cylindrical portion
- 112: first end
- 114: bore
- 120: first transition portion
- 130: center portion
- 132: groove
- 140: second transition portion
- 150: second cylindrical portion
- 152: second end
- 154: hollow interior

- 200: torsional horn
- 210: first cylindrical portion
- 212: first end
- 220: first transition portion
- 230: center portion
- 232: groove
- 240: second transition portion
- 250: second cylindrical portion
- 252: second end
- 254: hollow interior

- 300: torsional horn
- 310: first cylindrical portion
- 312: first end
- 320: first transition portion
- 330: center portion
- 332: groove
- 340: second transition portion
- 350: second cylindrical portion
- 352: second end

- 400: torsional horn
- 410: first cylindrical portion
- 412: first end
- 420: first transition portion
- 430: center portion
- 432: groove
- 440: second transition portion
- 450: second cylindrical portion
- 452: second end

- 500: torsional horn
- 510: first cylindrical portion
- 512: first end
- 520: first transition portion
- 530: center portion
- 532: groove
- 540: second transition portion
- 550: second cylindrical portion
- 552: second end

- β: angle of inclination with respect to an axis perpendicular to longitudinal axis of the torsional horn
- LG: length of groove
- WG: width of groove

## Claims

1. A torsional horn (1; 100; 200; 300; 400; 500) for converting longitudinal ultrasonic vibration to torsional ultrasonic vibration comprising:
a longitudinal main body having a first end (12; 112; 212; 312; 412; 512) for connecting to a converter and a second end (52; 152; 252; 352; 452; 552) spaced from the first end (12; 112; 212; 312; 412; 512) along a longitudinal axis of the main body, wherein the longitudinal axis corresponds to an excitation direction of the torsional horn (1; 100; 200; 300; 400; 500) by the converter during use,
a center portion (30; 130; 230; 330; 430; 530) arranged between the first (12; 112; 212; 312; 412; 512) and the second end (52; 152; 252; 352; 452; 552), and
a plurality of longitudinal grooves (32; 132; 232; 332; 432; 532) formed in the outer surface of the torsional horn (1; 100; 200; 300; 400; 500) in the center portion (30; 130; 230; 330; 430; 530), wherein a longitudinal axis of the plurality of longitudinal grooves (32; 132; 232; 332; 432; 532) is inclined with respect to the longitudinal axis of the torsional horn (1; 100; 200; 300; 400; 500) so that in use ultrasonic vibrations imparted with longitudinal direction from the converter to the first end (12; 112; 212; 312; 412; 512) of the main body are at least partly converted to torsional vibrations.

2. The torsional horn (1; 100; 200; 300; 400; 500) according to claim 1, wherein the center portion (30; 130; 230; 330; 430; 530) is formed convex so that the center portion (30; 130; 230; 330; 430; 530) has a larger diameter compared to a diameter of the torsional horn (1; 100; 200; 300; 400; 500) adjacent to the first (12; 112; 212; 312; 412; 512) and the second end (52; 152; 252; 352; 452; 552).

3. The torsional horn (1; 100; 200; 300; 400; 500) according to claim 2, wherein the convex center portion (30; 130; 230; 330; 430; 530) is formed elliptically.

4. The torsional horn (1; 100; 200; 300; 400; 500) according to one of the preceding claims, wherein the main body is integrally formed of one piece of material, especially a material comprising steel, titanium, ferro-titanium or aluminum.

5. The torsional horn (1; 100; 200; 300; 400; 500) according to one of the preceding claims, wherein a front face of the torsional horn (1; 100; 200; 300; 400; 500) at the second end (52; 152; 252; 352; 452; 552) comprises a knurling, a saw-tooth profile or an even surface.

6. The torsional horn (1; 100; 200; 300; 400; 500) according to one of the preceding claims, wherein the main body is partly hollow from the second end (52; 152; 252; 352; 452; 552) towards the center portion (30; 130; 230; 330; 430; 530), especially up to the center portion (30; 130; 230; 330; 430; 530).

7. The torsional horn (1; 100; 200; 300; 400; 500) according to claim 6, especially in combination with claim 2 or 3, wherein the center portion (30; 130; 230; 330; 430; 530) is formed at least partly elliptical in the interior.

8. The torsional horn (1; 100; 200; 300; 400; 500) according to one of the preceding claims, wherein the grooves (32; 132; 232; 332; 432; 532) are inclined with respect to the longitudinal axis in a range between 20° and 55°.

9. The torsional horn (1; 100; 200; 300; 400; 500) according to one of the preceding claims, wherein all grooves (32; 132; 232; 332; 432; 532) are inclined with the same angle.

10. The torsional horn (1; 100; 200; 300; 400; 500) according to one of the preceding claims, wherein the grooves (32; 132; 232; 332; 432; 532) are arranged on the circumference of the center portion (30; 130; 230; 330; 430; 530) equally spaced from each other.

11. The torsional horn (1; 100; 200; 300; 400; 500) according to one of the preceding claims, especially in combination with claim 2 or 3, comprising a first transition portion (20; 120; 220; 320; 420; 520) between the first end (12; 112; 212; 312; 412; 512) and the center portion (30; 130; 230; 330; 430; 530) and/or a second transition portion (40; 140; 240; 340; 440; 540) between the center portion (30; 130; 230; 330; 430; 530) and the second end (52; 152; 252; 352; 452; 552).

12. The torsional horn (1; 100; 200; 300; 400; 500) according to claim 11, comprising a first cylindrical portion (10; 110; 210; 310; 410; 510) between the first transition portion (20; 120; 220; 320; 420; 520) and the first end (12; 112; 212; 312; 412; 512) and/or a second cylindrical portion (50; 150; 250; 350; 450; 550) between the second transition portion (40; 140; 240; 340; 440; 540) and the second end (52; 152; 252; 352; 452; 552).

13. Ultrasonic processing device comprising a converter and a torsional horn (1; 100; 200; 300; 400; 500) according to one of the preceding claims.

14. Ultrasonic processing device according to claim 13, wherein the converter is directly coupled to the first end (12; 112; 212; 312; 412; 512) of the main body of the torsional horn (1; 100; 200; 300; 400; 500).

15. Usage of a torsional horn (1; 100; 200; 300; 400; 500) according to one of the claims 1 to 12 in a welding method, a cutting method or a punching method.

16. Manufacturing method for a torsional horn (1; 100; 200; 300; 400; 500) according to one of the claims 1 to 12, comprising the steps:
a. providing a block of material, especially a material comprising steel, titanium, ferro-titanium or aluminum,
b. processing the block of material on the outer side for establishing a longitudinal main body having a first end (12; 112; 212; 312; 412; 512) for connecting to a converter and a second end (52; 152; 252; 352; 452; 552) spaced from the first end (12; 112; 212; 312; 412; 512) along a longitudinal axis of the main body as well as a center portion (30; 130; 230; 330; 430; 530) arranged between the first (12; 112; 212; 312; 412; 512) and the second end (52; 152; 252; 352; 452; 552), and
c. forming a plurality of longitudinal grooves (32; 132; 232; 332; 432; 532) in the outer surface of the torsional horn (1; 100; 200; 300; 400; 500) in the center portion (30; 130; 230; 330; 430; 530), wherein a longitudinal axis of the plurality of longitudinal grooves (32; 132; 232; 332; 432; 532) is inclined with respect to the longitudinal axis of the torsional horn (1; 100; 200; 300; 400; 500).

17. Ultrasonic processing method using a torsional horn (1; 100; 200; 300; 400; 500) according to one of the claims 1 to 12, comprising the steps:
a. providing at least a first material to be processed and
b. processing the first material by means of the torsional horn (1; 100; 200; 300; 400; 500) according to one of the claims 1 to 12.

18. Ultrasonic processing method according to claim 17, wherein the processing is at least one of welding, cutting or punching.
